# FASCICULE DE BREVET EUROPEEN

(11) **EP 4 061 671 B1**
(45) Date de publication et mention de la délivrance du brevet: **08.11.2023**
(21) Numéro de dépôt: 20807433.6
(22) Date de dépôt: 20.11.2020
(51) Int. Cl.: B60P 3/03, B60R 25/01, B60R 25/10

(54) **VÉHICULE DE TRANSPORT D'OBJETS**
FAHRZEUG ZUM TRANSPORT VON GEGENSTÄNDEN
VEHICLE FOR TRANSPORTING OBJECTS

(30) Priorité: 20.11.2019 FR 1912966
(43) Date de publication de la demande: 28.09.2022
(73) Titulaire: El Hadiyen, Abdelhoihid, 34480 Autignac (FR)
(72) Inventeur: El Hadiyen, Abdelhoihid, 34480 Autignac (FR)
(74) Mandataire: Rhein, Alain
(86) Numéro de dépôt international: PCT/EP2020/082807
(87) Numéro de publication internationale: WO 2021/099530

(56) Documents cités:
- EP-A1- 3 339 109
- DE-A1- 10 256 638
- US-B1- 10 286 873

## Description

La présente invention concerne un véhicule de transport d'objets.

L'invention concerne le domaine des véhicules de transport d'objets, plus particulièrement le domaine de la fabrication des systèmes conçus pour empêcher le vol des objets transportés par un tel véhicule de transport d'objets.

A ce propos, on observera qu'un tel véhicule de transport d'objets est configuré pour transporter des objets, qui peuvent avoir de la valeur, et qui peuvent être constitués par des marchandises, par du matériel ou par des outils, notamment des outils électroportatifs.

Ces véhicules de transport d'objets comportent, usuellement, des moyens de roulement, un châssis qui surmonte ces moyens de roulement ainsi qu'une cabine, qui surmonte ce châssis, et qui accueille des personnes, notamment un conducteur, voire des passagers. Un tel véhicule de transport d'objets comporte, encore, au moins une caisse, qui surmonte le châssis, qui est destinée à contenir lesdits objets, et qui comporte au moins une ouverture. Un tel véhicule de transport d'objets comporte, également, au moins une porte, qui, chacune, referme une telle ouverture de la caisse, et qui, selon le cas, interdit ou autorise un accès aux objets contenus dans la caisse.

Un tel véhicule de transport d'objets comporte, aussi, un système pour empêcher un tiers non autorisé d'ouvrir une telle porte et de pénétrer à l'intérieur de la caisse pour dérober de tels objets. Un tel système comporte, usuellement, des moyens de verrouillage (notamment sous la forme d'un ensemble gâche-pêne) configurés pour verrouiller une telle porte par rapport à une autre porte ou par rapport à la caisse, ceci en position de fermeture d'une ouverture de la caisse par une telle porte. Ce système comporte, également, des moyens de commande configurés pour commander ces moyens de verrouillage, ceci en vue de leur faire adopter une position de verrouillage (dans laquelle la porte est maintenue dans une position fermée et interdit ainsi l'accès à la caisse et aux objets y contenus) ou une position de déverrouillage (permettant l'ouverture de la porte et autorisant l'accès à la caisse ainsi qu'aux objets y contenus). Ces moyens de commande peuvent adopter la forme d'une serrure et d'une clé.

On observera que ces véhicules de transport d'objets attirent la convoitise d'individus mal intentionnés qui sont tentés de s'emparer des objets contenus dans la caisse d'un tel véhicule. Pour ce faire, ces individus agissent par effraction usuellement sur les moyens de commande, plus particulièrement sur la serrure de ces moyens de commande.

A ce propos, on observera que ces moyens de commande présentent une résistance à l'effraction relativement limitée de sorte qu'ils ne résistent pas longtemps à une tentative d'effraction, ceci avant de céder et de donner libre accès aux objets contenus dans la caisse.

Les documents EP 3 339 109 A1 et DE 102 56 638 A1 montrent des véhicule de transport d'objets avec des portes avec serrures anti-effraction selon le préambule de la première revendication.

La présente invention se veut de remédier aux inconvénients des véhicules de transports d'objets et, en particulier, des moyens de commande des moyens de verrouillage qui équipent de tels véhicules.

A cet effet, l'invention concerne un véhicule de transport d'objets, ce véhicule comporte, d'une part, une caisse, qui est destinée à contenir ces objets, et qui comporte au moins une ouverture et, d'autre part, au moins une porte, qui, chacune, referme une telle ouverture, et qui, selon le cas, interdit ou autorise de pénétrer à l'intérieur de la caisse. Ce véhicule de transport d'objets est caractérisé par le fait qu'il comporte, d'une part, un treuil, qui est localisé à l'intérieur de la caisse, et qui comporte un crochet, un filin présentant une extrémité libre équipée avec ce crochet, un tambour d'enroulement du filin, et un moteur d'entraînement de ce tambour, d'autre part, des moyens de solidarisation pour solidariser le treuil fixement de la caisse, d'autre part encore, au moins un moyen de fixation, que comporte ladite au moins une porte, tandis que le crochet du treuil coopère directement ou indirectement avec ledit au moins un moyen de fixation et, d'autre part encore, des moyens de commande à distance du moteur du treuil.

Une autre caractéristique concerne le fait que le véhicule comporte au moins une porte, notamment arrière, qui comporte ledit au moins un moyen de fixation tandis que le crochet du treuil coopère directement avec ledit au moins un moyen de fixation, ceci par accrochage.

Encore une autre caractéristique concerne le fait que le véhicule comporte, d'une part, deux portes, notamment une porte arrière et une porte latérale, qui comportent, chacune, au moins un moyen de fixation et, d'autre part, au moins un moyen de raccordement pour raccorder le crochet du treuil au moins audit au moins un moyen de fixation.

Ainsi, le véhicule de transport d'objets conforme à l'invention comporte, d'une part, un treuil solidaire fixement de la caisse, d'autre part, des moyens de fixation du crochet de ce treuil (directement ou indirectement) sur une porte de ce véhicule et, d'autre part encore, des moyens de commande à distance du moteur de ce treuil.

Ces caractéristiques permettent d'assurer une coopération (directe ou indirecte) du crochet de ce treuil avec les moyens de fixation que comporte la porte d'un tel véhicule, de refermer cette porte, d'actionner les moyens de commande à distance du moteur du treuil jusqu'à ce que le filin de ce treuil soit sous tension, et de maintenir ce filin sous tension. Ceci permet, avantageusement, après fermeture de la porte d'un tel véhicule et malgré une dégradation des moyens de commande des moyens de verrouillage de la porte, de retenir et de maintenir cette porte dans sa position fermée, et, ainsi, d'empêcher l'ouverture de cette porte et, de ce fait, d'interdire l'accès à l'intérieur de la caisse du véhicule et, par conséquent, d'empêcher le vol des objets contenus dans cette caisse.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

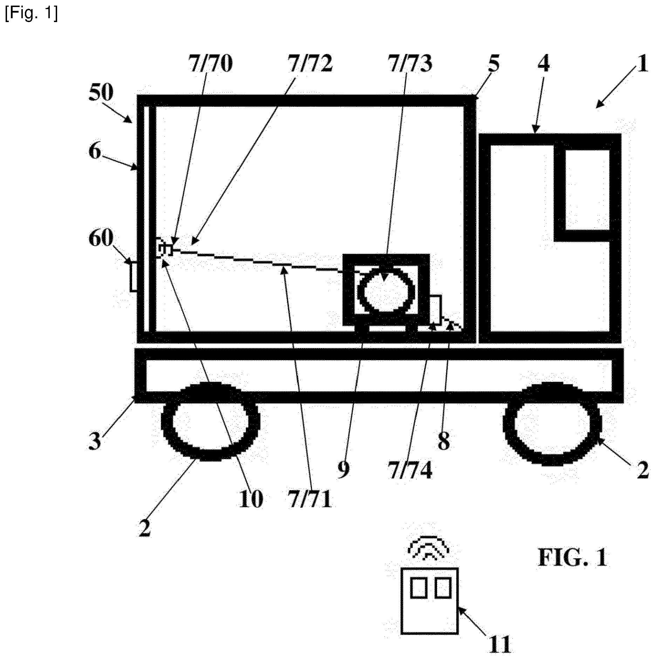

[Fig.1] représente une vue schématisée, de côté et en écorché d'un véhicule de transport conforme à l'invention.

La présente invention concerne le domaine de la fabrication des véhicules de transport d'objets, plus particulièrement le domaine de la fabrication des systèmes conçus pour empêcher le vol des objets transportés par un tel véhicule de transport.

Un tel véhicule de transport d'objets 1 comporte des moyens de roulement 2, un châssis 3 qui surmonte ces moyens de roulement 2 ainsi qu'une cabine 4, qui surmonte ce châssis 3, et qui accueille des personnes, notamment un conducteur, voire des passagers.

Un tel véhicule de transport d'objets 1 comporte, encore, au moins une caisse 5, qui surmonte le châssis 3, qui est positionnée à l'arrière de la cabine 4, et qui est destinée à contenir lesdits objets.

Une telle caisse 5 comporte au moins une ouverture 50 qui permet de pénétrer à l'intérieur de cette caisse 5, ceci pour y déposer ou pour y récupérer des objets.

Un tel véhicule de transport d'objets 1 comporte, également, au moins une porte 6, qui, chacune, referme une telle ouverture 50 de la caisse 5, et qui, selon le cas, interdit ou autorise un accès aux objets contenus dans cette caisse 5.

Une telle porte 6 comporte, usuellement, un système 60 pour empêcher un tiers non autorisé d'ouvrir une telle porte 6 et de pénétrer à l'intérieur de la caisse 5 pour dérober de tels objets. Un tel système 60 comporte, d'une part, des moyens de verrouillage (non représentés mais pouvant adopter la forme d'un ensemble gâche-pêne) configurés pour verrouiller une telle porte 6 par rapport à une autre porte 6 ou par rapport à la caisse 5, ceci en position de fermeture d'une ouverture 50 de la caisse 5 par une telle porte 6. Ce système 60 comporte, également, des moyens de commande (non représentés) configurés pour commander ces moyens de verrouillage, ceci en vue de leur faire adopter une position de verrouillage (dans laquelle ladite porte 6 est maintenue dans une position fermée et interdit ainsi l'accès à la caisse 5 et aux objets y contenus) ou une position de déverrouillage (permettant l'ouverture de ladite porte 6 et autorisant l'accès à la caisse 5 ainsi qu'aux objets y contenus). Ces moyens de commande peuvent adopter la forme d'une serrure et d'une clé amovible.

Selon l'invention, ce véhicule de transport d'objet 1 comporte un treuil 7 qui est localisé à l'intérieur de la caisse 5, et qui comporte un crochet 70, un filin 71 présentant une extrémité libre 72 équipée avec ce crochet 70, un tambour 73 d'enroulement du filin 71, et un moteur 74 d'entraînement de ce tambour 73.

Ce véhicule de transport d'objets 1 comporte, alors, également, des moyens d'alimentation en énergie électrique 8 du treuil 7, plus particulièrement du moteur 74 que comporte ce treuil 7.

Ce véhicule de transport d'objets 1 comporte, encore, des moyens de solidarisation 9 pour solidariser le treuil 7 fixement de la caisse 5.

Ce véhicule de transport d'objets 1 comporte, aussi, au moins un moyen de fixation 10, que comporte ladite au moins une porte 6, tandis que le crochet 70 du treuil 7 coopère directement ou indirectement avec ledit au moins un moyen de fixation 10.

Finalement, ce véhicule de transport d'objets 1 comporte des moyens de commande à distance 11 du treuil 7, plus particulièrement du moteur 74 du treuil 7.

Ainsi, tel que mentionné ci-dessus, le véhicule de transport d'objets 1 comporte au moins une porte 6.

Ce véhicule de transport d'objets 1 comporte, alors et tel que visible sur la figure 1, au moins une porte 6, notamment au moins une porte arrière 6, qui comporte ledit au moins un moyen de fixation 10 tandis que le crochet 70 du treuil 7 coopère directement avec ledit au moins un moyen de fixation 10, ceci par accrochage.

Selon un autre mode de réalisation (non représenté), le véhicule de transport d'objets 1 comporte, d'une part, au moins deux portes 6, notamment au moins une porte arrière et une porte latérale (plus particulièrement de type coulissant), qui comportent, chacune, au moins un moyen de fixation 10 et, d'autre part, au moins un moyen de raccordement (non représenté) pour raccorder le crochet 70 du treuil 7 au moins audit au moins un moyen de fixation 10.

En fait, un tel moyen de raccordement peut être configuré pour raccorder le moyen de fixation 10 que comporte l'une des portes 6 au moyen de fixation 10 que comporte l'autre porte 6. C'est avec un tel moyen de raccordement que coopère le crochet 70 du treuil 7 pour son raccordement aux moyens de fixation 10 que comportent lesdites portes 6, ceci pour une coopération indirecte de ce crochet 70 avec ledit au moins un moyen de fixation 10.

A ce propos, on observera que ledit au moins un moyen de raccordement peut être constitué par un tendeur et/ou par une chaîne.

Selon une autre caractéristique, ledit au moins un moyen de fixation 10 équipe un côté interne que présente ladite au moins une porte 6.

De manière alternative ou (et de préférence) additionnelle, ledit au moins un moyen de fixation 10 peut être constitué, chacun, par un anneau de fixation qui est solidaire de ladite au moins une porte 6.

Tel que mentionné ci-dessus, le véhicule 1 comporte des moyens de commande à distance 11 du treuil 7. Ces moyens de commande à distance 11 peuvent être constitués par une télécommande sans fil.

Encore une autre caractéristique concerne le fait que le véhicule de transport d'objets 1 (plus particulièrement le treuil 7) comporte, encore, des moyens de commande de l'interruption de l'enroulement du filin 71 sur le tambour 73.

De tels moyens de commande peuvent être configurés pour commander l'interruption de l'enroulement du filin 71 du treuil 7, ceci lorsque ce filin 71 est sous tension.

A ce propos, et de manière additionnelle, le véhicule de transport d'objets 1 (plus particulièrement le treuil 7, notamment les moyens de commande de l'interruption de l'enroulement) comporte des moyens de détection pour détecter lorsque le filin 71 est sous tension. Ces moyens de détection permettent, plus particulièrement, de détecter lorsque le filin 71 est sous tension en vue d'interrompre l'enroulement du filin 71, ceci par l'intermédiaire des moyens de commande de l'interruption de cet enroulement mentionnés ci-dessus.

Finalement, le véhicule de transport d'objets 1 comporte des moyens de débrayage pour débrayer le treuil 7, plus particulièrement le tambour 73 et/ou le moteur 74 du treuil 7.

De tels moyens de débrayage permettent, notamment en cas d'urgence et/ou de disfonctionnement du treuil 7 ou des moyens de commande à distance 11, de libérer le moteur 74 et/ou le tambour 73 et/ou le filin 71, ceci pour autoriser le déroulement de ce filin 71 et, ainsi, ouvrir ladite au moins une porte 6.

## Revendications

1. Véhicule de transport d'objets (1), ce véhicule (1) comporte, d'une part, une caisse (5), qui est destinée à contenir ces objets, et qui comporte au moins une ouverture (50) et, d'autre part, au moins une porte (6), qui, chacune, referme une telle ouverture (50), et qui, selon le cas, interdit ou autorise de pénétrer à l'intérieur de la caisse (5), **caractérisé par le fait qu'**il comporte, d'une part, un treuil (7), qui est localisé à l'intérieur de la caisse (5), et qui comporte un crochet (70), un filin (71) présentant une extrémité libre (72) équipée avec ce crochet (70), un tambour (73) d'enroulement du filin (71), et un moteur (74) d'entraînement de ce tambour (73), d'autre part, des moyens de solidarisation (9) pour solidariser le treuil (7) fixement de la caisse (5), d'autre part encore, au moins un moyen de fixation (10), que comporte ladite au moins une porte (6), tandis que le crochet (70) du treuil (7) coopère directement ou indirectement avec ledit au moins un moyen de fixation (10) et, d'autre part encore, des moyens de commande à distance (11) du moteur (74) du treuil (7).

2. Véhicule de transport d'objets (1) selon la revendication 1, **caractérisé par le fait qu'**il comporte au moins une porte (6) qui comporte ledit au moins un moyen de fixation (10) tandis que le crochet (70) du treuil (7) coopère directement avec ledit au moins un moyen de fixation (10), ceci par accrochage.

3. Véhicule de transport d'objets (1) selon la revendication 1, **caractérisé par le fait qu'**il comporte, d'une part, au moins deux portes (6) qui comportent, chacune, au moins un moyen de fixation (10) et, d'autre part, au moins un moyen de raccordement pour raccorder le crochet (70) du treuil (7) au moins audit au moins un moyen de fixation (10).

4. Véhicule de transport d'objets (1) selon la revendication 3, **caractérisé par le fait que** ledit au moins un moyen de raccordement est constitué par un tendeur et/ou par une chaîne.

5. Véhicule de transport d'objet (1) selon l'une quelconque des revendications précédentes, **caractérisé par le fait que** ledit au moins un moyen de fixation (10) est constitué, chacun, par un anneau de fixation qui est solidaire de ladite au moins une porte (6).

6. Véhicule de transport d'objets (1) selon l'une quelconque des revendications précédentes, **caractérisé par le fait que** les moyens de commande à distance (11) sont constitués par une télécommande sans fil.

7. Véhicule de transport d'objets (1) selon l'une quelconque des revendications précédentes, **caractérisé par le fait qu'**il comporte, encore, des moyens de commande de l'interruption de l'enroulement du filin (71) sur le tambour (73).

8. Véhicule de transport d'objets (1) selon la revendication 7, **caractérisé par le fait qu'**il comporte des moyens de détection pour détecter lorsque le filin (71) est sous tension.

9. Véhicule de transport d'objets (1) selon l'une quelconque des revendications précédentes, **caractérisé par le fait qu'**il comporte des moyens de débrayage pour débrayer le treuil (7), plus particulièrement le tambour (73) et/ou le moteur (74) du treuil (7).

## Patentansprüche

1. Fahrzeug (1) zum Transportieren von Gegenständen, wobei dieses Fahrzeug (1) einerseits einen Kastenaufbau (5), der dafür bestimmt ist, diese Gegenstände zu enthalten, und der mindestens eine Öffnung (50) aufweist, und andererseits mindestens eine Tür (6) aufweist, die jeweils eine solche Öffnung (50) verschließt, und die, je nach Fall, es verbietet oder erlaubt, in das Innere des Kastenaufbaus (5) einzudringen, **dadurch gekennzeichnet, dass** es einerseits eine Winde (7), die sich im Inneren des Kastenaufbaus (5) befindet und die einen Haken (70), ein Seil (71), das ein freies Ende (72) vorweist, das mit diesem Haken (70) versehen ist, eine Trommel (73) zum Aufwickeln des Seils (71) und einen Motor (74) zum Antreiben dieser Trommel (73) aufweist, andererseits Festverbindungsmittel (9) zum festen Verbinden der Winde (7) fix mit dem Kastenaufbau (5), andererseits noch mindestens ein Fixiermittel (10), das die mindestens eine Tür (6) aufweist, während der Haken (70) der Winde (7) mit dem mindestens einen Fixiermittel (10) direkt oder indirekt zusammenwirkt, und andererseits noch ferngesteuerte Mittel (11) des Motors (74) der Winde (7) aufweist.

2. Fahrzeug (1) zum Transportieren von Gegenständen nach Anspruch 1, **dadurch gekennzeichnet, dass** es mindestens eine Tür (6) aufweist, die das mindestens eine Fixiermittel (10) aufweist, während der Haken (70) der Winde (7) mit dem mindestens einen Fixiermittel (10) direkt zusammenwirkt, dies durch Verhaken.

3. Fahrzeug (1) zum Transportieren von Gegenständen nach Anspruch 1, **dadurch gekennzeichnet, dass** es einerseits mindestens zwei Türen (6), die jeweils mindestens ein Fixiermittel (10) aufweisen, und andererseits mindestens ein Verbindungsmittel zum Verbinden des Hakens (70) der Winde (7) mindestens mit dem mindestens einen Fixiermittel (10) aufweist.

4. Fahrzeug (1) zum Transportieren von Gegenständen nach Anspruch 3, **dadurch gekennzeichnet, dass** das mindestens eine Verbindungsmittel aus einem Spanner und/oder einer Kette besteht.

5. Fahrzeug (1) zum Transportieren von Gegenständen nach einem der vorstehenden Ansprüche, **dadurch gekennzeichnet, dass** das mindestens eine Fixiermittel (10) jeweils aus einem Fixierring besteht, der mit der mindestens einen Tür (6) fest verbunden ist.

6. Fahrzeug (1) zum Transportieren von Gegenständen nach einem der vorstehenden Ansprüche, **dadurch gekennzeichnet, dass** die ferngesteuerten Mittel (11) aus einer drahtlosen Fernsteuerung bestehen.

7. Fahrzeug (1) zum Transportieren von Gegenständen nach einem der vorstehenden Ansprüche, **dadurch gekennzeichnet, dass** es noch Mittel zum Steuern der Unterbrechung des Aufwickelns des Seils (71) auf die Trommel (73) aufweist.

8. Fahrzeug (1) zum Transportieren von Gegenständen nach Anspruch 7, **dadurch gekennzeichnet, dass** es Erfassungsmittel zum Erfassen aufweist, sobald das Seil (71) unter Spannung steht.

9. Fahrzeug (1) zum Transportieren von Gegenständen nach einem der vorstehenden Ansprüche, **dadurch gekennzeichnet, dass** es Auskupplungsmittel zum Auskuppeln der Winde (7), insbesondere der Trommel (73) und/oder des Motors (74) der Winde (7), aufweist.

## Claims

1. Vehicle (1) for transporting objects, the vehicle (1) comprising a crate (5) which is intended to hold said objects and which comprises at least one opening (50), and at least one door (6), each of which closes such an opening (50) and which, depending on the circumstances, prevents or allows entry into the crate (5), **characterized by** the fact that it comprises a winch (7), which is located inside the crate (5) and which comprises a hook (70), a cable (71) having a free end (72) equipped with said hook (70), a drum (73) for winding the cable (71) and a motor (74) for driving said drum (73), said vehicle also comprising securing means (9) for fixedly securing the winch (7) to the crate (5) and, additionally, at least one fastening means (10) comprised by said at least one door (6), while the hook (70) of the winch (7) cooperates directly or indirectly with said at least one fastening means (10) and, moreover, remote control means (11) of the motor (74) of the winch (7).

2. Vehicle (1) for transporting objects according to claim 1, **characterized by** the fact that it comprises at least one door (6) which comprises said at least one fastening means (10), while the hook (70) of the winch (7) cooperates directly with said at least one fastening means (10) by hooking thereon.

3. Vehicle (1) for transporting objects according to claim 1, **characterized by** the fact that it comprises at least two doors (6), which each comprise at least one fastening means (10) and at least one connecting means for connecting the hook (70) of the winch (7) at least to said at least one fastening means (10).

4. Vehicle (1) for transporting objects according to claim 3, **characterized by** the fact that said at least one connecting means consists of a tensioner and/or a chain.

5. Vehicle (1) for transporting objects according to any of the preceding claims, **characterized by** the fact that each of said at least one fastening means (10) consists of a fastening ring which is secured to said at least one door (6).

6. Vehicle (1) for transporting objects according to any of the preceding claims, **characterized by** the fact that the remote control means (11) consist of a wireless remote control.

7. Vehicle (1) for transporting objects according to any of the preceding claims, **characterized by** the fact that it also comprises means for controlling the interruption of the winding of the cable (71) on the drum (73).

8. Vehicle (1) for transporting objects according to claim 7, **characterized by** the fact that it comprises detection means for detecting when the cable (71) is tensioned.

9. Vehicle (1) for transporting objects according to any of the preceding claims, **characterized by** the fact that it comprises disengaging means for disengaging the winch (7), more particularly the drum (73) and/or the motor (74) of the winch (7).
